# EUROPÄISCHE PATENTSCHRIFT

(11) **EP 3 036 267 B1**
(45) Veröffentlichungstag und Bekanntmachung des Hinweises auf die Patenterteilung: **11.10.2017**
(21) Anmeldenummer: 14750724.8
(22) Anmeldetag: 12.08.2014
(51) Int. Cl.: C08G 18/48, C08G 18/76, C08K 5/00, C08G 18/18, C08G 18/22, C08K 5/49, C08L 71/02

(54) **VERBESSERTE POLYURETHAN- UND POLYISOCYANURAT-HARTSCHAUMSTOFFE AUF BASIS VON FETTSÄUREMODIFIZIERTEN POLYETHERPOLYOLEN**
IMPROVED RIGID POLYURETHANE AND POLYISOCYANURATE FOAMS BASED ON FATTY ACID MODIFIED POLYETHER POLYOLS
MOUSSES RIGIDES EN POLYURÉTHANE ET EN POLYISOCYANURATE AMÉLIORÉES À BASE DE POLYOLS DE POLYÉTHER MODIFIÉS PAR DES ACIDES GRAS

(30) Priorität: 20.08.2013 EP 13180963
(43) Veröffentlichungstag der Anmeldung: 29.06.2016
(73) Patentinhaber: BASF SE, 67056 Ludwigshafen am Rhein (DE)
(72) Erfinder: KALUSCHKE, Tobias, 49413 Dinklage (DE); KAMPF, Gunnar, 32351 Stemwede-Haldem (DE)
(74) Vertreter: BASF IP Association
(86) Internationale Anmeldenummer: PCT/EP2014/067266
(87) Internationale Veröffentlichungsnummer: WO 2015/024820

(56) Entgegenhaltungen:
- WO-A1-2013/102540
- US-A- 4 829 097

## Beschreibung

Die vorliegende Erfindung betrifft ein Verfahren zur Herstellung von Polyurethan- und Polyisocyanurat-Hartschaumstoffen unter Verwendung von fettsäuremodifizierten Polyetherpolyolen sowie Polyetherpolyolen, die durch Umsetzung von mindestens einer Verbindung mit einer OH-Funktionalität von 2 oder 3 mit Alkylenoxid hergestellt werden, wobei die Gewichtsmenge Ethylenoxid am Gesamtgewicht Alkylenoxid mindestens 90 Gew.-% beträgt. Die vorliegende Erfindung betrifft außerdem die so erhältlichen Hartschaumstoffe sowie deren Verwendung zur Herstellung von Sandwichelementen mit starren oder flexiblen Deckschichten. Darüber hinaus richtet sich die vorliegende Erfindung auf die zugrundeliegenden Polyolkomponenten.

Die Herstellung von Polyurethan-Hartschaumstoffen ist bekannt und wird in zahlreichen Patent- und Literaturveröffentlichungen beschrieben. Polyurethan-Hartschaumstoffe werden üblicherweise durch Umsetzung von organischen Polyisocyanaten mit einer oder mehreren Verbindungen mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren, in Gegenwart von Treibmitteln, Katalysatoren und gegebenenfalls Hilfsmitteln und/oder Zusatzstoffen hergestellt.

Ein wesentliches Einsatzgebiet der Polyurethan-Hartschaumstoffe sind Verbundelemente. Die Herstellung von Verbundelementen aus insbesondere metallischen Deckschichten und einem Kern aus Schaumstoffen auf Isocyanatbasis, zumeist Polyurethan-(PUR) oder Polyisocyanurat-(PIR) Schaumstoffen, häufig auch als Sandwichelemente bezeichnet, auf kontinuierlich arbeitenden Doppelbandanlagen wird gegenwärtig in großem Umfang praktiziert. Neben Sandwichelementen zur Kühlhausisolierung gewinnen Elemente mit farbigen Deckschichten zur Gestaltung von Fassaden verschiedenster Gebäude immer mehr an Bedeutung. Als Deckschichten werden dabei neben beschichteten Stahlblechen auch Edelstahl-, Kupfer- oder Aluminiumbleche eingesetzt.

Es ist wichtig, dass die Polyurethan-Hartschaumstoffe die Hohlräume gleichmäßig und lunkerfrei ausfüllen, so dass durch möglichst gute Verbindung mit den Deckschichten eine stabile Konstruktion erzeugt wird, die für eine gute thermische Isolation sorgt. Um Schaumfehlstellen zu verhindern, muss hierzu das schaumfähige Reaktionsgemisch innerhalb einer kurzen Zeit in den zu isolierenden Hohlraum eingeführt werden. Zum Ausschäumen derartiger Gegenstände werden üblicherweise Niederdruck- oder vorzugsweise Hochdruckmaschinen eingesetzt.

Geeignete Polyurethan-Hartschaumstoffe können in bekannter Weise durch Umsetzung von organischen Polyisocyanaten mit einer oder mehreren Verbindungen mit mindestens zwei reaktiven Wasserstoffatomen in Gegenwart von Treibmitteln, Katalysatoren und gegebenenfalls Hilfsmitteln und/oder Zusatzstoffen hergestellt werden. Als Verbindungen mit mindestens zwei gegenüber Isocyanatgruppen reaktiven Wasserstoffatomen werden bei der Herstellung der Polyurethan-Hartschaumstoffen üblicherweise Polyetheralkohole und/oder Polyesteralkohole eingesetzt.

Aufgrund der hohen Reaktivität werden in Hartschaumsystemen in der Regel keine Polyole mit reaktiven, primären OH-Gruppen verwendet. Als Hartschaumpolyole dienen im Stand der Technik ganz überwiegend Polyetherole auf Basis von Propylenoxid, da bei Verwendung derartiger Polyole die Systemreaktivität besser gesteuert werden kann. Darauf verweisen beispielsweise ausdrücklich J.M. Buist und H. Gudgeon in Advances in Polyurethane Technology, Maclaren and Sons Ltd, London, 1968, Seite 190.

Typische hochfunktionelle propoxilierte Hartschaumpolyole mit OH-Zahlen von mehr als 400 mg KOH/g werden in Hartschaumsystemen nach dem Stand der Technik gegebenenfalls mit geringen Anteilen längerkettiger Polyole niedriger Funktionalität von höchstens 3 versetzt. Nachteilig bewirkt die Zugabe dieser Polyole mit niedriger Funktionalität jedoch in der Regel eine Verringerung der Durchhärtung während der Schäumreaktion.

Werden ethoxilierte Polyetherpolyole mit endständigen primären OH-Gruppen im größeren Anteil in Hartschaumsystemen eingesetzt, so muss durch die erhöhte Reaktivität der Systemkomponente der Anteil an Katalysator in der Regel stark reduziert werden, um gleiche Abbindezeiten des Schaums zu erzielen. Die hierbei verringerte Menge an Katalysator führt jedoch zu einem signifikant schlechteren Durchhärtevermögen des Polyurethanschaums. Da die üblicherweise verwendeten Hartschaumkatalysatoren jedoch ein erhöhtes Gefahrenpotential aufweisen, ist es dennoch wünschenswert, die Einsatzmengen dieser Substanzen in Polyurethanhartschaumsystemen zu reduzieren.

Neben der allgemein schlechteren Schaumhärtung führt die Verwendung größerer Mengen an Polyetherolen auf Basis von Ethylenoxid zusammen mit herkömmlichen Hartschaumpolyolen auf Basis von Propylenoxid ferner aufgrund des Polaritätsunterschiedes beider Polyole oftmals zu Problemen in der Lagerstabilität der Systemkomponenten. Aus diesen Gründen werden Polyetherpolyole mit größeren Mengen Ethylenoxid in geschlossenzelligen Hartschaumsystemen üblicherweise vermieden.

In DE-A 197 23 193 werden Hartschaumstoffe mit einer verringerten Wärmeleitfähigkeit genannt. Die verwendeten Polyole weisen teilweise einen Ethylenoxidinnenblock auf, was die Viskosität günstig beeinflussen soll.

In EP-A 463493 werden wassergetriebene Hartschäume beschrieben, die als Blumensteckschaum Anwendung finden. Die zu verwendeten Polyole enthalten ebenso ethylenoxidhaltige Innenblöcke.

In DE-A 36 27 236 werden hydrophile Hartschaumstoffe beansprucht, die ethylenoxidhaltige Polyether mitverwenden. Die genannten Schaumstoffe sind offenzellig und lediglich als Blumensteckschaum geeignet.

In EP-A 0968240 werden Polyurethan- oder urethanmodifizierte Polyisocyanuratschäume beschrieben, dessen Systemkomponente in geringen Anteilen mindestens zwei Polyoxyethylenpolyethermonoole enthalten, um die Treibmittellöslichkeit zu verbessern.

In DE A-26 07 380 werden Polyisocyanuratschäume beschrieben, die unter Verwendung hoher Anteile an FCKW erzeugt werden. Dabei finden auch Polyetherole Anwendung, die bis zu 50 % Ethylenoxid enthalten können.

WO 98/21256 und WO 98/21260 offenbaren Hartschäume geringer Härte, die nach einem Walkvorgang den Charakter von Weichschäumen annehmen. Die beschrieben Rezepturen verwenden in untergeordneten Mengen auch Polyole mit Ethylenoxidanteilen.

In EP_A 1293524 wird ein Polyolgemisch zur Herstellung von reaktionsverzögerten Hartschaumstoffen bestehend aus einem hohen Anteil ethylenoxidreicher Polyetherpolyole beschrieben. Die Durchhärtung des Schaums dieser Systeme ist jedoch nicht ausreichend.

Nach dem vorliegenden Stand der Technik gelingt es nicht, unter Verwendung von ethylenoxidreichen Polyetherolen mit endständigen OH-Gruppen hochwertige, insbesondere nicht spröde Hartschaumstoffe mit einer geringen Katalysatormenge bei gleichzeitig guter Durchhärtung herzustellen.

Es bestand demzufolge die Aufgabe Polyurethanhartschaumsysteme zu entwickeln, die eine verringerte Katalysatormenge zur Reaktion benötigen, aber dennoch eine gute Schaumhärtung aufweisen und zu geschlossenzelligen Hartschäumen geringer Sprödigkeit führen. Weiterhin sollen die entwickelten Polyurethan-Hartschaumsysteme auf der Basis einer phasenstabilen Polyol-Komponente mit guter Lagerstabilität und einer geringen Viskosität aufgebaut sein und eine ausreichend lange Startzeit aufweisen.

Diese Aufgabe wird durch ein Verfahren zur Herstellung von Polyurethan- oder Polyisocyanurat-Hartschaumstoffen gelöst, welches die Umsetzung von
A) mindestens einem Polyisocyanat,
B) mindestens einem fettsäuremodifiziertem Polyetherpolyol,
C) mindestens einem Polyetherpolyol hergestellt durch Umsetzung von mindestens einem Polyol als Starter mit Alkylenoxid,
D) gegebenenfalls einem oder mehrerer Polyole, die sich von denen der Komponente B) und C) unterscheiden, wobei das Verhältnis der Gewichtsmenge von Komponente D) zur Summe der Gewichtsmengen der Komponenten B) und C) von 0 bis 1 beträgt,
E) gegebenenfalls einem oder mehrerer Flammschutzmittel,
F) einem oder mehrerer Treibmittel,
G) einem oder mehrerer Katalysatoren, und
H) gegebenenfalls weiterer Hilfsmittel und/oder Zusatzstoffe,
wobei das mindestens eine Polyol der Komponente C) ausgewählt wird aus Verbindungen mit einer OH-Funktionalität von 2 oder 3 und die Gewichtsmenge von Ethylenoxid am Gesamtgewicht Alkylenoxid in Komponente C) mindestens 90 Gew.-% beträgt, umfasst, und die Komponente B) gemäß Anspruch 1 definiert ist.

### Komponente A

Unter Polyisocyanat wird im Rahmen der vorliegenden Erfindung eine organische Verbindung verstanden, welche mindestens zwei reaktive Isocyanatgruppen pro Molekül enthält, d. h. die Funktionalität beträgt mindestens 2. Sofern die eingesetzten Polyisocyanate oder ein Gemisch mehrerer Polyisocyanate keine einheitliche Funktionalität aufweisen, beträgt der zahlengewichtete Mittelwert der Funktionalität der eingesetzten Komponente A) mindestens 2.

Als Polyisocyanate A) kommen die an sich bekannten aliphatischen, cycloaliphatischen, araliphatischen und vorzugsweise die aromatischen mehrwertigen Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente A) in diesem Fall verschiedene mehrfunktionelle Isocyanate enthält. Als Polyisocyanat in Betracht kommende mehrfunktionelle Isocyanate weisen zwei (im folgenden Diisocyanate genannt) oder mehr als zwei Isocyanatgruppen pro Molekül auf.

Im Einzelnen seien insbesondere genannt: Alkylendiisocyanate mit 4 bis 12 Kohlenstoffatomen im Alkylenrest, wie 1,12-Dodecandiioscyanat, 2-Ethyltetramethylendiisocyanat-1,4,2-methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Polyisocyanate, wie 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexandiisocyanat und 4,4'-, 2,4'- und/oder 2,2'-Dicyclohexylmethandiisocyanat.

Häufig werden auch modifizierte Polyisocyanate, d.h. Produkte, die durch chemische Umsetzung organischer Polyisocyanate erhalten werden und die mindestens zwei reaktive Isocyanatgruppen pro Molekül aufweisen, verwendet. Insbesondere genannt seien Ester-, Harnstoff-, Biuret-, Allophanat-, Carbodiimid-, Isocyanurat-, Uretdion-, Carbamat- und/oder Urethangruppen enthaltende Polyisocyanate.

Besonders bevorzugt sind als Polyisocyanate der Komponente A) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als Polyisocyanat ganz besonders bevorzugt ist polymeres Diphenylmethandiisocyanat. Bei polymerem Diphenylmethandiisocyanat (im folgenden polymeres MDI genannt) handelt es sich um ein Gemisch aus zweikernigem MDI und oligomeren Kondensationsprodukten und somit Derivaten von Diphenylmethandiisocyanat (MDI). Die Polyisocyanate können bevorzugt auch aus Mischungen von monomeren aromatischen Diisocyanaten und polymerem MDI aufgebaut sein.

Polymeres MDI enthält neben zweikernigem MDI ein oder mehrere mehrkernige Kondensationsprodukte des MDI mit einer Funktionalität von mehr als 2, insbesondere 3 oder 4 oder 5. Polymeres MDI ist bekannt und wird häufig als Polyphenylpolymethylenisocyanat oder auch als oligomeres MDI bezeichnet. Polymeres MDI ist üblicherweise aus einer Mischung aus MDI-basierten Isocyanaten mit unterschiedlicher Funktionalität aufgebaut. Üblicherweise wird polymeres MDI im Gemisch mit monomerem MDI eingesetzt.

Die (mittlere) Funktionalität eines Polyisocyanates, welches polymeres MDI enthält, kann im Bereich von ungefähr 2,2 bis ungefähr 5 variieren, insbesondere von 2,3 bis 4, insbesondere von 2,4 bis 3,5. Eine solche Mischung von MDI-basierten mehrfunktionellen Isocyanaten mit unter-schiedlichen Funktionalitäten ist insbesondere das Roh-MDI, das bei der Herstellung von MDI als Zwischenprodukt erhalten wird.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente A) mindestens zwei, insbesondere mindestens 2,2 und besonders bevorzugt mindestens 2,4. Die Funktionalität der Komponente A) beträgt bevorzugt von 2,2 bis 4 und besonders bevorzugt von 2,4 bis 3.

Vorzugsweise beträgt der Gehalt an Isocyanatgruppen der Komponente A) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer besonders bevorzugten Ausführungsform besteht die Komponente A) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente A) besonders bevorzugt oligomeres Diphenylmethandiisocyanat und weist eine Funktionalität von mindestens 2,4 auf.

Die Viskosität (DIN 53018 bei 25°C) der eingesetzten Komponente A) kann in einem weiten Bereich variieren. Vorzugsweise weist die Komponente A) eine Viskosität von 100 bis 3000 mPa•s, besonders bevorzugt von 200 bis 2500 mPa•s auf.

### Komponente B

Erfindungsgemäß besteht Komponente B) aus einem oder mehreren fettsäuremodifizierten Polyetherpolyolen. Unter einem fettsäuremodifizierten Polyetherpolyol ist im Rahmen der vorliegenden Erfindung ein Umsetzungsprodukt aus mindesten einem Startermolekül mit Alkylenoxid und mindestens einer Fettsäure oder einem Fettsäurederivat zu verstehen. Derartige Polyole sind dem Fachmann an sich bekannt. Die Komponente B ist das Umsetzungsprodukt von
B1) von 15 bis 63 Gew.-%, insbesondere von 20 bis 55 Gew.-%, eines oder mehrerer Polyole oder Polyamine mit einer mittleren Funktionalität von 2,5 bis 8,
B2) von 2 bis 30 Gew.-%, insbesondere von 5 bis 25 Gew.-%, einer oder mehrerer Fettsäuren und/oder Fettsäuremonoestern, und/ oder Pflanzenölen,
B3) von 35 bis 83 Gew.-%, insbesondere von 40 bis 75 Gew.-%, eines oder mehrerer Alkylenoxide mit 2 bis 4 C-Atomen,
jeweils bezogen auf die Gewichtsmenge der Komponenten B1) bis B3), die 100 Gew.-% ergibt.

Bevorzugt weisen die Polyole, Polyamine oder Gemische von Polyolen und/oder Polyaminen der Komponente B1) eine mittlere Funktionalität von 3 bis 6, besonders bevorzugt von 3,5 bis 5,5 auf.

Bevorzugte Polyole oder Polyamine der Komponente B1) sind ausgewählt aus der Gruppe bestehend aus Sorbit, Glucose, Sucrose, Pentaerythrit, Trimethylolpropan, Glycerin, Toluylendiamin, Ethylendiamin, Ethylenglykolen, Propylenglykol und Wasser. Besonders bevorzugt sind Sorbit, Glucose, Sucrose, Glycerin, Wasser und Ethylenglykole sowie Gemische daraus, insbesondere bevorzugt sind Gemische enthaltend zwei oder mehr Verbindungen ausgewählt aus Saccharose, Glycerin, Wasser und Diethylenglykol.

In einer speziellen Ausführungsform enthält die Komponente B1) ein Gemisch aus Glycerin und Saccharose.

Der Anteil der Komponente B1) an der Gewichtsmenge der Komponenten B1) bis B3) beträgt zudem besonders bevorzugt von 15 bis 63 Gew.-%, insbesondere von 20 bis 55 Gew.-%, ganz besonders bevorzugt von 23 bis 30 Gew.-%.

Im Allgemeinen besteht Komponente B2) aus einer oder mehreren Fettsäuren, einem oder mehreren Fettsäuremonoestern oder einem oder mehreren Pflanzenölen. Bevorzugt verwendet werden Fettsäuren oder Fettsäuremonoester, die aus der Gruppe bestehend aus Polyhydroxyfettsäuren, Ricinolsäure, Hydroxyl-modifizierten Ölen, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Stearinsäure, Arachidonsäure, Timnodonsäure, Clupanodonsäure und Cervonsäure ausgewählt werden. Bevorzugte Fettsäuremonoester sind die Methylester, insbesondere Ölsäuremethylester.

In einer bevorzugten Ausführungsform der Erfindung werden die Fettsäuren oder Fettsäuremonoester B2) in Form von Fettsäuremethylestern, Biodiesel oder reinen Fettsäuren eingesetzt. Besonders bevorzugt sind Biodiesel und reine Fettsäuren, speziell bevorzugt sind reine Fettsäuren, vorzugsweise Ölsäure und Stearinsäure, insbesondere Ölsäure.

In einer weiteren bevorzugten Ausführungsform der vorliegenden Erfindung ist die Fettsäure oder der Fettsäuremonoester B2) Ölsäure oder Stearinsäure oder ein Derivat dieser Fettsäuren, besonders bevorzugt sind Ölsäure, Ölsäuremethylester, Stearinsäure und Stearinsäuremethylester. Die Fettsäure oder der Fettsäuremonoester dient in der Regel dazu, die Treibmittellöslichkeit bei der Herstellung von Polyurethanschaumstoffen zu verbessern.

Der Anteil der Komponente B2) an der Gesamtmenge der Komponenten B1) bis B3) beträgt besonders bevorzugt von 2 bis 25 Gew.-%, insbesondere von 5 bis 20 Gew.-%, ganz besonders bevorzugt von 8 bis 17 Gew.-% und insbesondere 10 bis 15 Gew.-%.

Durch die vorstehend beschriebenen bevorzugten Ausführungsformen der Komponente B2) wird insbesondere eine geringe Viskosität der resultierenden Polyolkomponente B) bis H) erzielt. Geeignete Alkylenoxide B3) mit 2 bis 4 C-Atomen sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt sind Gemische aus Ethylenoxid und Propylenoxid mit mindestens 35 Gew.-% Propylenoxid, insbesondere bevorzugt ist reines Propylenoxid.

Die Umsetzung unter Erhalt von Komponente B) wird vorzugsweise in Gegenwart eines Alkoxylierungskatalysators durchgeführt. In einer bevorzugten Ausführungsform wird als Alkoxylierungskatalysator ein Amin verwendet, insbesondere N,N-Dimethylethanolamin oder Imidazole. Besonders bevorzugt ist Imidazol.

Der Anteil an Alkylenoxiden an der Gesamtmenge der Komponente B) beträgt im Allgemeinen von 35 bis 83 Gew.-%, bevorzugt von 40 bis 75 Gew.-%, besonders bevorzugt von 50 bis 65 Gew.-%.

Die erfindungsgemäß im Rahmen von Komponente B) verwendeten fettsäuremodifizierten Polyetherpolyole weisen vorzugsweise eine OH-Zahl von 200 bis 700 mg KOH/g, insbesondere von 300 bis 600 mg KOH/g, besonders bevorzugt von 350 bis 500 mg KOH/g und ganz besonders bevorzugt von 380 bis 460 mg KOH/g auf. Die erfindungsgemäß verwendeten fettsäuremodifizierten Polyetherpolyole weisen eine mittlere Funktionalität von 2,5 bis 8, bevorzugt von 3 bis 6, besonders bevorzugt von 3,5 bis 5,5 und insbesondere von 4 bis 5 auf. Die Viskosität der erfindungsgemäß verwendeten fettsäuremodifizierten Polyetherpolyole beträgt im Allgemeinen < 10 000 mPa*s, bevorzugt < 7000 mPa*s, besonders bevorzugt < 5000 mPa*s und speziell < 4500 mPa*s, jeweils gemessen bei 25 °C nach DIN 53018.

Im Allgemeinen ist der Anteil der erfindungsgemäß eingesetzten fettsäuremodifizierten Polyetherpolyole B) > 20 Gew.-%, bevorzugt > 30 Gew.-%, besonders bevorzugt > 40 Gew.-% und insbesondere bevorzugt > 45 Gew.-%, bezogen auf die gesamte Gewichtsmenge der Komponenten B) bis H).

Im Allgemeinen ist der Anteil der erfindungsgemäßen fettsäuremodifizierten Polyetherpolyole B) < 90 Gew.-%, bevorzugt < 80 Gew.-%, besonders bevorzugt < 70 Gew.-% und insbesondere bevorzugt < 65 Gew.-%, bezogen auf die gesamte Gewichtsmenge der Komponenten B) bis H).

### Komponente C

Erfindungsgemäß besteht Komponente C) aus mindestens einem Polyetherpolyol hergestellt durch Umsetzung von mindestens einem Polyol als Starter mit Alkylenoxid, wobei das mindestens eine Polyol der Komponente C) ausgewählt wird aus Verbindungen mit einer OH-Funktionalität von 2 oder 3 und die Gewichtsmenge von Ethylenoxid am Gesamtgewicht Alkylenoxid in Komponente C) mindestens 90 Gew.-% beträgt.

Vorzugsweise beträgt die Gewichtsmenge von Ethylenoxid am Gesamtgewicht Alkylenoxid in Komponente C) mindestens 92 Gew.-%, insbesondere mindestens 94 Gew.-%, besonders bevorzugt mindestens 96 Gew.-%, insbesondere mindestens 98 Gew.-%. Als Alkylenoxid zur Herstellung der erfindungsgemäß verwendeten Polyetherpolyole C) wird ganz besonderes bevorzugt ausschließlich Ethylenoxid verwendet, d. h. die Gewichtsmenge von Ethylenoxid am Gesamtgewicht Alkylenoxid in Komponente C) beträgt in dieser Ausführungsform 100 Gew.-%.

Polyetherpolyole sind im Gegensatz zu fettsäuremodifizierten Polyetherpolyolen Verbindungen, die mindestens eine Etherverknüpfung und mindestens zwei reaktive Hydroxygruppen aufweisen, jedoch keine Fettsäuregruppen besitzen

Die erfindungsgemäß verwendeten Polyetherpolyole C), werden nach bekannten Verfahren unter Anwesenheit eines Alkoxylierungskatalysators, nachfolgend als Katalysator bezeichnet hergestellt.

Geeignete Katalysatoren sind insbesondere Alkalihydroxide, wie Natrium- oder Kaliumhydroxid, oder Alkalialkoholate, wie Natriummethylat, Natrium- oder Kaliumethylat oder Kaliumisopropylat. Geeignete Katalysatoren sind außerdem aminische Alkoxylierungs-Katalysatoren, insbesondere Dimethylethanolamin (DMEOA), Imidazol und Imidazolderivate sowie Mischungen daraus.

Bevorzugte Alkoxylierungskatalysatoren sind KOH und aminische Alkoxylierungs-Katalysatoren. Da bei Verwendung von KOH als Alkoxylierungs-Katalysator der Polyether zunächst neutralisiert werden muss und das entstehende Kaliumsalz abgetrennt werden muss, ist die Verwendung von aminischen Alkoxylierungs-Katalysatoren besonderes bevorzugt. Bevorzugte aminische Alkoxylierungs-Katalysatoren sind ausgewählt aus der Gruppe enthaltend Dimethylethanolamin (DMEOA), Imidazol und Imidazolderivate sowie Mischungen daraus, besonders bevorzugt Imidazol.

Vorzugsweise werden als Starter für Komponente C) keine aromatischen Amine verwendet. Besonders bevorzugt enthalten die Starter für Komponente C) keine Aminogruppen. Besonders bevorzugte Verbindungen mit einer OH-Funktionalität von 2 oder 3 sind Ethylenglykol und Glycerin, insbesondere Glycerin.

Die OH-Zahl der Polyetherpolyole der Komponente C) beträgt vorzugsweise von 1500 bis 150, besonders bevorzugt von 1200 bis 200, insbesondere von 900 bis 300 und im Speziellen 700 bis 400 mg KOH/g.

Im Allgemeinen beträgt der Anteil der Komponente C) von 1 bis 60 Gew.-%, bevorzugt von 2 bis 45 Gew.-%, besonders bevorzugt von 5 bis 35 Gew.-% bezogen auf das Gesamtgewicht der Komponenten B) bis H).

### Komponente D)

Erfindungsgemäß können als Komponente D) ein oder mehrere Polyole mitverwendet werden, die sich von denen der Komponenten B) und C) unterscheiden. Geeignete Polyole D) sind dabei insbesondere Polyetherpolyole und Polyesterpolyole. Erfindungsgemäß beträgt das Verhältnis der Gewichtsmenge von Komponente D) zur Summe der Gewichtsmengen der Komponenten B) und C) von 0 bis 1.

Vorzugsweise beträgt das Verhältnis der Gewichtsmenge von Komponente D) zur Summe der Gewichtsmengen der Komponenten B) und C) von 0 bis 0,8, insbesondere von 0 bis 0,7, besonders bevorzugt von 0 bis 0,5, insbesondere von 0 bis 0,4, ganz besonders bevorzugt von 0 bis 0,3, insbesondere von 0 bis 0,2, ausdrücklich bevorzugt von 0 bis 0,1. In einer besonders bevorzugten Ausführungsform wird keine Komponente D) verwendet. Bei Beachtung insbesondere der vorstehend beschriebenen Ausführungsformen wird gewährleistet, dass die eingesetzte Katalysatormenge reduziert werden kann, ohne das Durchhärtevermögen des Polyurethanschaums zu verschlechtern. Gleichzeitig ist die entsprechende Polylkomponente lagerstabil.

Geeignete Polyesterpolyole, können beispielsweise aus organischen Dicarbonsäuren mit 2 bis 12 Kohlenstoffatomen, vorzugsweise aromatischen, oder Gemischen aus aromatischen und aliphatischen Dicarbonsäuren und mehrwertigen Alkoholen, vorzugsweise Diolen, mit 2 bis 12 Kohlenstoffatomen, vorzugsweise 2 bis 6 Kohlenstoffatomen hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Verwendet werden können ebenso Derivate dieser Dicarbonsäuren, wie beispielsweise Dimethylterephthalat. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der weiteren Polyesterpolyole für Komponente D) kommen auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzes Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxyl-modifizierten Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

In einer insbesondere bevorzugten Ausführungsform werden im Rahmen von Komponente D) keine Polyesterpolyole eingesetzt, d. h. sofern eine Komponente D) Verwendung findet, dann sind Polyetherpolyole als Komponente D) bevorzugt.

Als Komponente D) können somit zusätzlich oder bevorzugt alternativ ein oder mehrere Polyetherpolyole mit umgesetzt werden. Geeignete Polyetherole D) können nach bekannten Verfahren, beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält, oder durch kationische Polymerisation mit Lewis-Säuren, wie Antimonpentachlorid, Borfluorid-Etherat oder Bleicherde, hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Propylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diaminodiphenylmethan. Besonders bevorzugt sind die genannten diprimären Amine, beispielsweise Ethylendiamin.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin, und Ammoniak.

Vorzugsweise verwendet werden zwei oder mehrwertige Alkohole, wie Ethandiol, Propandiol-1,2 und -1,3, Diethylenglykol (DEG), Dipropylenglykol, Butandiol-1,4, Hexandiol-1,6, Glycerin, Trimethylolpropan, Pentaerythrit, Sorbit und Saccharose.

Die OH-Zahl der Polyetherpolyole der Komponente D), sofern enthalten, beträgt vorzugsweise von 1500 bis 100, besonders bevorzugt von 1200 bis 150, insbesondere von 900 bis 200 und im Speziellen 700 bis 200 mg KOH/g.

Im Allgemeinen beträgt der Anteil der Komponente D) von 0 bis 35 Gew.-%, bevorzugt 0 bis 25 Gew.-%, besonders bevorzugt 0 bis 15 Gew.-%, bezogen auf die Summe der Gewichtsmengen der Komponenten B) bis H). Ganz besonders bevorzugt wird gar kein weiteres Polyol D) mitverwendet, d. h. der Anteil der Komponente D) an der Polyolkomponente beträgt ganz besonders bevorzugt 0 Gew.-%.

### Komponente E)

Als Flammschutzmittel E) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und PHT-4-Diol, sowie chlorierte Phosphate wie Tris-(2-chlorethyl)phosphat, Tris-(2-chlorpropyl)phosphat (TCPP), Tris(1,3-dichlorpropyl)phosphat, Trikresylphosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP), Diphenylkresylphosphat (DPK) als flüssige Flammschutzmittel eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin, Blähgraphit und gegebenenfalls aromatische Polyester zum Flammfestmachen der Polyurethan-Hartschaumstoffe verwendet werden.

Bevorzugte Flammschutzmittel weisen keine gegenüber Isocyanatgruppen reaktive Gruppen auf. Vorzugsweise sind die Flammschutzmittel bei Raumtemperatur flüssig. Besonders bevorzugt sind TCPP, DEEP, TEP, DMPP und DPK, insbesondere TCPP.

Im Allgemeinen beträgt der Anteil der Flammschutzmittel E) 0 bis 30 Gew.-%. Komponente E) wird bevorzugt in einem Anteil von mindestens 1 Gew.-%, besonders bevorzugt mindestens 5 Gew.-%, jeweils bezogen auf die Summe der Gewichtsmengen der Komponenten B) bis H) verwendet. Andererseits wird Komponente E) bevorzugt in einem Anteil von höchstens 20 Gew.-%, besonders bevorzugt höchstens 15 Gew.-% bezogen auf die Summe der Gewichtsmengen der Komponenten B) bis H) verwendet.

### Komponente F)

Zu Treibmitteln F), welche zur Herstellung der Polyurethan-Hartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel wie niedrig siedende Kohlenwasserstoffe eingesetzt werden. Geeignet sind insbesondere Flüssigkeiten, welche gegenüber den Polyisocyanaten A) inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und isoPentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise werden als chemische Treibmittel Wasser, Ameisensäure-Wasser-Mischungen oder Ameisensäure verwendet, besonders bevorzugte chemische Treibmittel sind Ameisensäure-Wasser-Mischungen sowie Wasser. Vorzugsweise werden keine halogenierten Kohlenwasserstoffe als Treibmittel verwendet. Vorzugsweise werden als physikalische Treibmittel Pentanisomere, insbesondere n-Pentan und/oder Cyclopentan, bzw. Mischungen von Pentanisomeren verwendet.

Ganz besonders bevorzugt werden die Treibmittel der Komponente F) ausgewählt aus der Gruppe bestehend aus Wasser, Ameisensäure und Pentan, insbesondere aus der Gruppe Wasser und Pentan. Ausdrücklich bevorzugt ist als Komponente F) eine Mischung aus Wasser und Pentan.

Die Treibmittel sind entweder ganz oder teilweise in der Polyolkomponente (d.h. B+C+D+E+F+G+H) gelöst oder werden direkt vor dem Verschäumen der Polyolkomponente über einen Statikmischer zudosiert. Für gewöhnlich liegen Wasser, Ameisensäure-Wasser-Mischungen oder Ameisensäure ganz oder teilweise in der Polyolkomponente gelöst vor. Das physikalische Treibmittel (beispielsweise Pentan) und gegebenenfalls der Rest des chemischen Treibmittels wird "online", d. h. unmittelbar vor der Herstellung des Hartschaumstoffs, dosiert.

Zu der Polyolkomponente wird in situ Pentan, eventuell ein Teil des chemischen Treibmittels, sowie teilweise oder vollständig der Katalysator zugegeben. Die Hilfs- und Zusatzstoffe, wie auch die Flammschutzmittel sind bereits im Polyolblend enthalten.

Dient Wasser, Ameisensäure oder eine Ameisensäure-Wasser-Mischung als Treibmittel, so wird es vorzugsweise der Polyolkomponente (B+C+D+E+F+G+H) in einer Menge von 0,2 bis 10 Gew.-%, bezogen auf die Komponente B), zugesetzt. Der Zusatz des Wassers, der Ameisensäure oder der Ameisensäure-Wasser-Mischung kann in Kombination mit dem Einsatz der anderen beschriebenen Treibmittel erfolgen. Bevorzugt wird Wasser oder eine Ameisensäure-Wasser-Mischung in Kombination mit Pentan eingesetzt.

Die eingesetzte Menge des Treibmittels bzw. der Treibmittelmischung liegt bei 1 bis 35 Gew.-%, vorzugsweise 1 bis 25 Gew.-%, besonders bevorzugt 1,5 bis 20 Gew.-%, jeweils bezogen auf die Summe der Gewichtsmengen der Komponenten B) bis H).

### Komponente G)

Als Katalysatoren G) zur Herstellung der Polyurethan-Hartschaumstoffe werden insbesondere Verbindungen verwendet, die die Reaktion der reaktiven Wasserstoffatome, insbesondere Hydroxylgruppen, enthaltenden Verbindungen der Komponenten B) bis H) mit den Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandiamin-1,6, Pentamethyldiethylentriamin, Bis(2-dimethylaminoethyl)ether, Dimethylpiperazin, N-Dimethylaminoethylpiperidin, 1,2-Dimethylimidazol, 1-Azabicyclo-(2,2,0)-octan, 1,4.Diazabicyclo.-(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)-ethanol, N,N',N"-Tris-(dialkylaminoalkyl)hexahydrotriazine, z.B. N,N',N"-Tris-(dimethylaminopropyl)-s-hexahydrotriazin, und Triethylendiamin.

Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen. Vorzugsweise verwendet werden 0,001 bis 10 Gew.-teile Katalysator bzw. Katalysatorkombination, bezogen (d. h. gerechnet) auf 100 Gewichtsteile der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Bevorzugt wird mindestens ein basischer Polyurethankatalysator verwendet, vorzugsweise aus der Gruppe der tertiären Amine.

Insbesondere bevorzugt ist der Einsatz von Treibkatalysatoren wie Bis(2-dimethylaminoethyl)ether, Pentamethyldiethylentriamin, 2-(N,N-Dimethylaminoethoxy)ethanol, oder N,N,N-(trimethyl-N-hydroxyethyl-bisaminoethylether).

Bevorzugt wird zusätzlich mindestens ein Katalysator aus der Gruppe der Trimerisierungskatalysatoren verwendet, vorzugsweise Amoniumionen- oder Alkalimetallsalze, besonders bevorzugt Ammonium- oder Alkalimetallcarboxylate. Speziell wird Kaliumacetat als einziger Trimerisierungskatalysator verwendet.

In einer besonderen Ausführungsform der Erfindung wird ein Katalysatorgemisch bestehend aus Bis(2-dimethylaminoethyl)ether und Kaliumacetat verwendet.

Die Katalysatoren werden zweckmäßigerweise in der geringsten wirksamen Menge verwendet. Der Anteil der Komponente G) an der Gesamtmenge der Komponenten B) bis H) beträgt vorzugsweise von 0,001 bis 15 Gew.-%, insbesondere von 0,01 bis 10 Gew.-% jeweils bezogen auf die Summe der Gewichtsmengen der Komponenten B) bis H).

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

### Komponente H

Der Reaktionsmischung zur Herstellung der Polyurethan-Hartschaumstoffe können gegebenenfalls noch weitere Hilfsmittel und/oder Zusatzstoffe H) zugesetzt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-%, vorzugsweise 0,01 bis 5 Gew.-%, bezogen auf die Summe der Gewichtsmengen der Komponenten B) bis H) angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.- %, vorzugsweise 1 bis 40 Gew.-%, bezogen auf die Summe der Gewichtsmengen der Komponenten B) bis H), zugegeben, wobei jedoch der Gehalt an Matten, Vliesen und Geweben aus natürlichen und synthetischen Fasern Werte bis 80 Gew.-%, bezogen auf die Summe der Gewichtsmengen der Komponenten B) bis H), erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Ein weiterer Erfindungsgegenstand ist eine Polyolmischung umfassend die vorstehend definierten Komponenten B) und C) sowie gegebenenfalls die vorstehend beschriebenen Komponenten D), E), F), G) und H).

Die Polykomponente der vorliegenden Erfindung besteht dabei vorzugsweise aus folgenden Komponenten:
Von 20 bis 90 Gew.-% der Komponente B),
von 1 bis 60 Gew.-% der Komponente C),
von 0 bis 35 Gew.-% der Komponente D), wobei das Verhältnis der Gewichtsmenge von Komponente D) zur Summe der Gewichtsmengen der Komponenten B) und C) von 0 bis 1 beträgt, von 0 bis 30 Gew.-% Komponente E),
gegebenenfalls von 1 bis 35 Gew.-% Komponente F),
von 0,001 bis 15 Gew.-% Komponente G), und
von 0,01 bis 10 Gew.-% Komponente H),
jeweils wie vorstehend definiert und jeweils bezogen auf das Gesamtgewicht der Komponenten B) bis H), wobei sich die Gew.-% zu 100 Gew.-% ergänzen.

Besonders bevorzugt besteht die erfindungsgemäße Polyolkomponente aus
von 30 bis 80 Gew.-% der Komponente B),
von2 bis 45 Gew.-% der weiteren Komponente C),
von 0 bis 25 Gew.-% der Komponente D), wobei das Verhältnis der Gewichtsmenge von Komponente D) zur Summe der Gewichtsmengen der Komponenten B) und C) von 0 bis 1 beträgt, von 1 bis 20 Gew.-% Komponente E),
gegebenenfalls von 1 bis 25 Gew.-% Komponente F),
von 0,01 bis 10 Gew.-% Komponente G), und
von 0,01 bis 5 Gew.-% Komponente H),
jeweils wie vorstehend definiert und jeweils bezogen auf das Gesamtgewicht der Komponenten B) bis H), wobei sich die Gew.-% zu 100 Gew.-% ergänzen.

Besonders bevorzugt beträgt der Anteil der Komponente D) 0 Gew.-%.

Zur Herstellung der erfindungsgemäßen Polyurethan-Hartschaumstoffe werden die organischen Polyisocyanate A), die fettsäuremodifizierten Polyetherpolyole B), die erfindungsgemäß verwendeten Polyetherole C), gegebenenfalls die Polyetherole D) und die weiteren Komponenten E) bis H) in solchen Mengen vermischt, dass das Äquivalenzverhältnis von NCO-Gruppen der Polyisocyanate A) zur Summe der reaktiven Wasserstoffatome der Komponenten B), gegebenenfalls C) sowie D) bis H), 1 bis 6:1, vorzugsweise 1,05 bis 2,5:1 und insbesondere 1,1 bis 1,8:1, beträgt.

Die Polyurethan-Hartschaumstoffe werden vorteilhafter Weise nach dem oneshot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Die Ausgangskomponenten werden bei einer Temperatur von 15 bis 90 °C, vorzugsweise von 20 bis 60 °C und insbesondere von 20 bis 35 °C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers oder einer Rührschnecke durchgeführt werden. Die Formwerkzeugtemperatur beträgt zweckmäßigerweise 20 bis 110 °C, vorzugsweise 30 bis 70 °C und insbesondere 40 bis 60 °C.

Die nach dem erfindungsgemäßen Verfahren hergestellten Polyurethan-Hartschaumstoffe sind vorzugsweise geschlossenzellig mit einer Geschlossenzelligkeit von mehr als 85 Vol.-% nach DIN ISO 4590, bevorzugt mehr als 90 Vol.-% und weisen eine Dichte von 15 bis 300 g/l, vorzugsweise von 20 bis 100 g/l und insbesondere von 25 bis 60 g/l auf.

Die nach dem erfindungsgemäßen Verfahren hergestellten Polyurethan- oder Polyisocyanurat-Hartschaumstoffe eignen sich insbesondere zur Herstellung von Sandwichelementen mit starren oder flexiblen Deckschichten.

### Beispiele

Im Folgenden werden einige Beispiele zur Veranschaulichung der Erfindung angeführt. Dabei dienen die Beispiele nur illustrativen Zwecken und sollen keinesfalls den Umfang der Ansprüche einschränken.

Fettsäuremodifiziertes Polyetherpolyol 1
42,5 kg Glycerin, 0,2 kg Imidazol, 68,7 g Saccharose sowie 54,0 kg Biodiesel wurden bei 25 °C in einen Reaktor vorgelegt. Anschließend wurde dieser mit Stickstoff inertisiert. Der Kessel wurde auf 130 °C erhitzt und 234,5 kg Propylenoxid zu dosiert. Nach einer Abreaktionszeit von 2 h wurde für 60 Minuten unter vollem Vakuum bei 100 °C evakuiert und anschließend auf 25 °C abgekühlt. Es wurden 382 g Produkt erhalten.

Das erhaltene fettsäuremodifizierte Polyetherpolyol 1 besaß folgende Kennwerte:
OH-Zahl: 419,0 mg KOH/g
Viskosität, DIN 53018 (25 °C): 3730 mPas
Säurezahl: kleiner 0,001 mg KOH/g
Wassergehalt: 0,007%

### Polyetherpolyol 1

Ein Polyetherpolyol mit einer Hydroxylzahl von 535 mg KOH/g, basierend auf Ethylenoxid und Glycerin als Starter.

### Polyetherpolyol 2

Ein Hartschaum Polyetherpolyol mit einer Hydroxylzahl von 490 mg KOH/g, basierend auf Propylenoxid und einer Mischung aus Sucrose und Glycerin als Starter.

### Polyetherpolyol 3

Ein vernetzendes Hartschaum Polyetherpolyol mit einer Hydroxylzahl von 805 mg KOH/g, basierend auf Propylenoxid und Glycerin als Starter.

### Polyetherpolyol 4

Ein Polyetherpolyol mit einer Hydroxylzahl von 400 mg KOH/g, basierend auf Propylenoxid und Glycerin als Starter.

### Katalysatormischung 1

18,8 Gew.% Bis(2-dimethylaminoethyl)ether, 8,7 Gew.-% Kaliumacetat, 62,7 Gew. % Dipropylenglycol, 9,3 Gew.-% Monoethylenglycol und 0,5 Gew.-% Wasser ergeben eine stabile Katalysatormischung.

### Beispiel 1

Aus 49,15 Gew.-Teilen des "fettsäuremodifierten Polyetherpolyols 1", 33,0 Gew.-Teilen des "Polyetherpolyols 1", 15,0 Gew.-Teilen Tris-2-chlorisopropylphosphat (TCPP), 2,0 Gew.-Teilen silikonhaltiger Schaumstabilisator (Tegostab^{®} B 8496 der Firma Goldschmidt) und 0,85 Gew.-Teilen Wasser wurde durch Vermischen eine Polyolkomponente hergestellt.

Die Polyolkomponente war bei 20 °C phasenstabil. Diese wurde mit einem Polymer-MDI mit einem NCO-Gehalt von 31,5 Gew.-% (Lupranat^{®} M50 der BASF SE) in Anwesenheit von n-Pentan (7,5 Gew.-Teile), der "Katalysatormischung 1" und Wasser bei einem Isocyanatindex von 135 umgesetzt. Die Mengen an "Katalysatormischung 1" und Wasser wurden so ausgewählt, dass die Abbindezeit 45 ± 1 Sekunde betrug und der resultierende Schaum eine Dichte von 35 ± 1 kg/m³ aufwies.

### Vergleichsbeispiel 1

Aus 82,15 Gew.-Teilen des "fettsäuremodifizierten Polyetherpolyols 1", 15,0 Gew.-Teilen Tris-2-chlorisopropylphosphat (TCPP), 2,0 Gew.-Teilen silikonhaltiger Schaumstabilisator (Tegostab^{®} B 8496 der Firma Goldschmidt) und 0,85 Gew.-Teilen Wasser wurde durch Vermischen eine Polyolkomponente hergestellt.

Die Polyolkomponente war bei 20 °C phasenstabil. Diese wurde mit einem Polymer-MDI mit einem NCO-Gehalt von 31,5 Gew.-% (Lupranat^{®} M50 der BASF SE) in Anwesenheit von n-Pentan (7,5 Gew.-Teile), der "Katalysatormischung 1" und Wasser bei einem Isocyanatindex von 131 umgesetzt. Die Mengen an "Katalysatormischung 1" und Wasser wurden so ausgewählt, dass die Abbindezeit 45 ± 1 Sekunde betrug und der resultierende Schaum eine Dichte von 35 ± 1 kg/m³ aufwies.

### Vergleichsbeispiel 2

Aus 49,15 Gew.-Teilen des "fettsäuremodifizierten Polyetherpolyols 1", 12 Gew.-Teilen des "Polyetherpolyols 3", 21 Teilen des" Polyetherpolyols 4", 15,0 Gew.-Teilen Tris-2-chlorisopropylphosphat (TCPP), 2,0 Gew.-Teilen silikonhaltiger Schaumstabilisator (Tegostab^{®} B 8496 der Firma Goldschmidt) und 0,85 Gew.-Teilen Wasser wurde durch Vermischen eine Polyolkomponente hergestellt.

Die Polyolkomponente war bei 20 °C phasenstabil. Diese wurde mit einem Polymer-MDI mit einem NCO-Gehalt von 31,5 Gew.-% (Lupranat^{®} M50 der BASF SE) in Anwesenheit von n-Pentan (7,5 Gew.-Teile), der "Katalysatormischung 1" und Wasser bei einem Isocyanatindex von 137 umgesetzt. Die Mengen an "Katalysatormischung 1" und Wasser wurden so ausgewählt, dass die Abbindezeit 45 ± 1 Sekunde betrug und der resultierende Schaum eine Dichte von 35 ± 1 kg/m³ aufwies.

### Vergleichsbeispiel 3

Aus 42,55 Gew.-Teilen des "Polyetherpolyols 2", 6,6 Gew.-Teilen Rizinusöl, 33,0 Gew.-Teilen des "Polyetherpolyols 1", 15,0 Gew.-Teilen Tris-2-chlorisopropylphosphat (TCPP), 2,0 Gew.-Teilen silikonhaltiger Schaumstabilisator (Tegostab^{®} B 8496 der Firma Goldschmidt) und 0,85 Gew.-Teilen Wasser wurde durch Vermischen eine Polyolkomponente hergestellt. Die Polyolkomponente war bei 20 °C phaseninstabil.

### Vergleichsbeispiel 4

Aus 49,15 Gew.-Teilen des "Polyetherpolyols 2", 33,0 Gew.-Teilen des "Polyetherpolyols 1", 15,0 Gew.-Teilen Tris-2-chlorisopropylphosphat (TCPP), 2,0 Gew.-Teilen silikonhaltiger Schaumstabilisator (Tegostab^{®} B 8496 der Firma Goldschmidt) und 0,85 Gew.-Teilen Wasser wurde durch Vermischen eine Polyolkomponente hergestellt. Die Polyolkomponente war bei 20 °C phaseninstabil.

### Messung der Schaumsprödigkeit

Die Messung der Sprödigkeit wird mit dem Bolzentest durchgeführt. Die Messung erfolgt 2,5; 3,0; 4,0; 5,0; 6,0 und 7,0 Minuten nach Beginn der Vermischung von 80 g Reaktionsgemisch der Komponenten A bis H in einem Becher aus Polypropylen mit dem Volumen von 1,15 l.

Zur Messung wird ein Stahlbolzen mit einer Kugelkalotte von 10 mm Radius bei einer Prüfgeschwindigkeit von 100 mm/Minute 10 mm tief in den entstandenen Schaumpilz eingedrückt. Jede Messung erfolgt an einer anderen Stelle im gleichen Abstand zum Mittelpunkt der Schaumoberfläche.

Ein Einreißen der Schaumoberfläche bei der entsprechenden Messung wird gegebenenfalls notiert. Nach 7 Minuten wird die Sprödigkeit des Schaums zudem sensorisch durch ein Eindrücken der Schaumoberfläche mit dem Daumen bestimmt.

Messung der anfänglichen Schaumhärtung: Die Messung der Schaumhärtung wird ebenfalls mit dem Bolzentest durchgeführt. Die Messung erfolgt 2,5 und 3,0 Minuten nach Beginn der Vermischung von 80 g Reaktionsgemisch der Komponenten A bis H in einem Becher aus Polypropylen mit dem Volumen von 1,15 l.

Zur Messung wird ein Stahlbolzen mit einer Kugelkalotte von 10 mm Radius bei einer Prüfgeschwindigkeit von 100 mm/Minute 10 mm tief in den entstandenen Schaumpilz eingedrückt. Jede Messung erfolgt an einer anderen Stelle im gleichen Abstand zum Mittelpunkt der Schaumoberfläche. Bei dem Eindringen des Prüfstempels in den Schaum wird die maximale Kraft in N, bestimmt die auf den Prüfstempel wirkt. Angegeben ist die Summe der Härtungswerte nach 2,5 und 3,0 Minuten

**Tabelle 1**

| | Beispiel 1 | Vergleichsbeispiel 1 | Vergleichsbeispiel 2 | Vergleichsbeispiel 3 | Vergleichsbeispiel 4 |
|---|---|---|---|---|---|
| Fettsäuremodifiziertes Polyetherol 1 | 49,15 | 82,15 | 49,15 | | |
| Polyetherpolyol 1 | 33 | | | 33 | 33 |
| Polyetherpolyol 2 | | | | 42,55 | 49,15 |
| Polyetherpolyol 3 | | | 12 | | |
| Polyetherpolyol 4 | | | 21 | | |
| Rizinusöl | | | | 6,6 | |
| Tris-2-chlorisopropylphosphat | 15 | 15 | 15 | 15 | 15 |
| Tegostab B 8496 | 2 | 2 | 2 | 2 | 2 |
| Wasser | 0,85 | 0,85 | 0,85 | 0,85 | 0,85 |
| A Komponente | klar | klar | klar | trüb | trüb |
| Phasenstabilität | Ja | Ja | Ja | Nein | Nein |
| Katalysatormischung 1 | 3,3 | 6 | 6,5 | | |
| Startzeit [s] | 10 | 6 | 6 | | |
| Schaumrohdichte | 34,5 | 35,5 | 35,4 | | |
| Summe Härtung 2,5 | 135,7 | 136,4 | 130,5 | | |
| Einreißen der Schaumoberfläche [min] | - | 6,0 und 7,0 | 6,0 und 7,0 | | |
| Subjektive Schaumsprödigkeit | gering | hoch | hoch | | |

Die zur Einstellung der Abbindezeit benötigte Menge an Katalysatormischung 1 ist in Beispiel 1 gegenüber Vergleichsbeispiel 1 und Vergleichsbeispiel 2 deutlich reduziert. Dennoch zeigt Beispiel 1 gegenüber Vergleichsbeispiel 1 und Vergleichsbeispiel 2 überraschenderweise ein vergleichbar gutes Härtungsverhalten. Für eine schnelle kontinuierliche und diskontinuierliche Verarbeitung des Polyurethansystems zu Formteilen, wie z.B. Sandwichelementen ist insbesondere eine gute anfängliche Härtung in den ersten drei Minuten entscheidend.

Die reduzierte Einsatzmenge an Katalysator in Beispiel 1 ist zudem durch das geringere Gefährdungspotential vorteilhaft für eine sicherere Verarbeitung.

Überraschenderweise ist die Startzeit von Beispiel 1 trotz identischer Abbindezeiten deutlich geringer als bei Vergleichsbeispiel 1 und Vergleichsbeispiel 2. Die längere Startzeit ist vorteilhaft bei der Verarbeitung und ermöglicht eine bessere Vermischung der Reaktionskomponenten, was sich positiv auf die Schaumqualität auswirkt.

Überraschenderweise ist zudem die Sprödigkeit des Schaums aus Beispiel 1 im direkten Vergleich mit Vergleichsbeispiel 1 und Vergleichsbeispiel 2 deutlich geringer. Die geringere Sprödigkeit ist sensorisch durch leichtes Eindrücken der Schaumoberfläche mit den Fingern feststellbar und lässt sich zudem durch das frühere Aufreißen der Schaumoberfläche im Vergleichsbeispiel 1 und Vergleichsbeispiel 2 nach 6,0 und 7,0 Minuten messtechnisch belegen.

Die Polyolkomponente aus Vergleichsbeispiel 3 besitzt einen identischen Anteil an Fettsäuren verglichen mit der Polyolkomponente von Beispiel 1. Die Polyolkomponente aus Vergleichsbeispiel 3 ist kurz nach dem Vermischen der Einzelkomponenten trübe und mehrere Stunden nach dem Ansetzen ist eine Phasentrennung zu beobachten. Damit ist eine reproduzierbare und fehlerfreie großtechnische Verarbeitung nicht möglich.

Die Polyolkomponente aus Vergleichsbeispiel 4 besitzt keinen Fettsäureanteil und ist kurz nach dem Vermischen der Einzelkomponenten trübe. Mehrere Tage nach dem Ansetzen ist ebenso eine Phasentrennung zu beobachten. Damit ist eine reproduzierbare und fehlerfreie großtechnische Verarbeitung nicht möglich.

## Patentansprüche

1. Verfahren zur Herstellung von Polyurethan-Hartschaumstoffen oder Polyisocyanurat-Hartschaumstoffen umfassend die Umsetzung von
A) mindestens einem Polyisocyanat,
B) mindestens einem fettsäuremodifiziertem Polyetherpolyol,
C) mindestens einem Polyetherpolyol hergestellt durch Umsetzung von mindestens einem Polyol als Starter mit Alkylenoxid,
D) gegebenenfalls einem oder mehrerer Polyole, die sich von denen der Komponente B) und C) unterscheiden, wobei das Verhältnis der Gewichtsmenge von Komponente D) zur Summe der Gewichtsmengen der Komponenten B) und C) von 0 bis 1 beträgt,
E) gegebenenfalls einem oder mehrerer Flammschutzmittel,
F) einem oder mehrerer Treibmittel,
G) einem oder mehrerer Katalysatoren, und
H) gegebenenfalls weiterer Hilfsmittel und/oder Zusatzstoffe,
wobei
das mindestens eine fettsäuremodifizierte Polyetherpolyol B) eine Funktionalität von 2,5 bis 8 aufweist und mindestens ein Umsetzungsprodukt von
B1) 15 bis 63 Gew.-% eines oder mehrerer Polyole oder Polyamine mit einer mittleren Funktionalität von 2,5 bis 8,
B2) 2 bis 30 Gew.-% einer oder mehrerer Fettsäuren und/oder Fettsäuremonoester,
B3) 35 bis 83 Gew.-% eines oder mehrerer Alkylenoxide mit 2 bis 4 C-Atomen,
jeweils bezogen auf die Gewichtsmenge der Komponenten B1) bis B3), die 100 Gew.-% ergibt, enthält, und
das mindestens eine Polyol der Komponente C) ausgewählt wird aus Verbindungen mit einer OH-Funktionalität von 2 oder 3 und die Gewichtsmenge von Ethylenoxid am Gesamtgewicht Alkylenoxid in Komponente C) mindestens 90 Gew.-% beträgt.

2. Verfahren nach Anspruch 1, wobei als Starter in Komponente C) kein aromatisches Amin verwendet wird.

3. Verfahren nach Anspruch 1, wobei in Komponente C) als Alkylenoxid ausschließlich Ethylenoxid verwendet wird.

4. Verfahren nach Anspruch 1, wobei der mindestens eine Starter der Komponente C) ausgewählt wird aus Ethylenglykol und Glycerin.

5. Verfahren nach einem oder mehreren der Ansprüche 1 bis 4, wobei keine Komponente D) verwendet wird.

6. Verfahren nach einem oder mehreren der Ansprüche 1 bis 5, wobei die Polyole oder Polyamine der Komponente B1) ausgewählt sind aus der Gruppe bestehend aus Zuckern, Pentaerythrit, Sorbit, Trimethylolpropan, Glycerin, Toluylendiamin, Ethylendiamin, Ethylenglycol, Propylenglycol und Wasser.

7. Verfahren nach einem oder mehreren der Ansprüche 1 bis 6, wobei die Komponente B1) ein Gemisch aus Glycerin und Saccharose enthält.

8. Verfahren nach einem oder mehreren der Ansprüche 1 bis 7, wobei die Komponente B2) Ölsäure oder ein Ölsäurederivat enthält.

9. Verfahren nach einem oder mehreren der Ansprüche 1 bis 8, wobei das Alkylenoxid der Komponente B3) Propylenoxid ist.

10. Verfahren nach einem oder mehreren der Ansprüche 1 bis 9, wobei die Komponente B) eine OH-Zahl von 200 bis 700 mg KOH/g aufweist.

11. Verfahren nach einem oder mehreren der Ansprüche 1 bis 10, wobei zur Herstellung von Komponente B) ein aminischer Alkoxylierungskatalysator mitverwendet wird.

12. Verfahren nach einem oder mehreren der Ansprüche 1 bis 11, wobei Komponente E) Tris-(2-chlorpropyl)phosphat (TCPP) ist.

13. Verfahren nach einem oder mehreren der Ansprüche 1 bis 12, wobei Komponente G) eine Mischung aus Kaliumacetat und Bis(2-dimethylaminoethyl)ether ist.

14. Polyolmischung enthaltend die Komponenten B), C) sowie gegebenenfalls D), E), F) G) und H) jeweils wie in den Ansprüchen 1 bis 13 definiert.

15. Polyolmischung nach Anspruch 14 enthaltend
20 bis 90 Gew.-% der fettsäuremodifizierten Polyetherpolyole B),
1 bis 60 Gew.-% der Polyetherpolyole C),
0 bis 35 Gew.-% der Polyole D), wobei das Verhältnis der Gewichtsmenge von Komponente D) zur Summe der Gewichtsmengen der Komponenten B) und C) von 0 bis 1 beträgt,
1 bis 30 Gew.-% Flammschutzmittel E),
0,001 bis 15 Gew.-% der Katalysatoren G),
0,01 bis 10 Gew.-% der Hilfsmittel und/oder Zusatzstoffe H),
gegebenenfalls 1 bis 35 Gew.-% Treibmittel F),
jeweils bezogen auf das Gesamtgewicht der Komponenten B) bis H), wobei sich die Gew.-% zu 100 Gew.-% ergänzen.

## Claims

1. A process for producing rigid polyurethane foams or rigid polyisocyanurate foams which comprises the reaction of
A) at least one polyisocyanate,
B) at least one fatty acid modified polyether polyol,
C) at least one polyether polyol prepared by reacting at least one polyol starter with alkylene oxide,
D) optionally one or more polyols other than those of components B) and C), wherein the ratio of the weight quantity of component D) to the sum total of the weight quantities of components B) and C) is in the range from 0 to 1,
E) optionally one or more flame retardants,
F) one or more blowing agents,
G) one or more catalysts, and
H) optionally further auxiliaries and/or admixture agents,
wherein the at least one fatty acid modified polyether polyol B) has a functionality of 2.5 to 8 and comprises at least one reaction product of
B1) 15 to 63 wt% of one or more polyols or polyamines having an average functionality of 2.5 to 8,
B2) 2 to 30 wt% of one or more fatty acids and/or fatty acid monoesters,
B3) 35 to 83 wt% of one or more alkylene oxides having 2 to 4 carbon atoms,
all based on the weight amount of components B1) to B3), which adds up to 100 wt%, and at least one polyol of component C) is selected from compounds having an OH functionality of 2 or 3 and the weight quantity of ethylene oxide comprises not less than 90 wt% of the total weight of alkylene oxide in component C).

2. The process according to claim 1 wherein no aromatic amine is used as starter in component C).

3. The process according to claim 1 wherein exclusively ethylene oxide is used as alkylene oxide in component C).

4. The process according to claim 1 wherein the at least one starter of component C) is selected from ethylene glycol and glycerol.

5. The process according to one or more of claims 1 to 4 wherein no component D) is used.

6. The process according to one or more of claims 1 to 5 wherein the polyols or polyamines of component B1) are selected from the group consisting of sugars, pentaerythritol, sorbitol, trimethylolpropane, glycerol, tolylenediamine, ethylenediamine, ethylene glycol, propylene glycol and water.

7. The process according to one or more of claims 1 to 6 wherein said component B1) comprises a mixture of glycerol and sucrose.

8. The process according to one or more of claims 1 to 7 wherein said component B2) comprises oleic acid or an oleic acid derivative.

9. The process according to one or more of claims 1 to 8 wherein the alkylene oxide of component B3) is propylene oxide.

10. The process according to one or more of claims 1 to 9 wherein said component B) has an OH number of 200 to 700 mg KOH/g.

11. The process according to one or more of claims 1 to 10 wherein component B) is produced using an aminic alkoxylation catalyst.

12. The process according to one or more of claims 1 to 11 wherein component E) is tris(2-chloropropyl) phosphate (TCPP).

13. The process according to one or more of claims 1 to 12 wherein component G) is a mixture of potassium acetate and bis(2-dimethylaminoethyl) ether.

14. A polyol mixture comprising said components B), C) and also optionally D), E), F), G) and H) each as defined in claims 1 to 13.

15. The polyol mixture according to claim 14 comprising
20 to 90 wt% of fatty acid modified polyether polyols B),
1 to 60 wt% of polyether polyols C),
0 to 35 wt% of polyols D), wherein the ratio of the weight quantity of component D) to the sum total of the weight quantities of components B) and C) is in the range from 0 to 1,
1 to 30 wt% of flame retardants E),
0.001 to 15 wt% of catalysts G),
0.01 to 10 wt% of auxiliaries and/or admixture agents H),
optionally 1 to 35 wt% of blowing agents F),
all based on the total weight of components B) to H), wherein the wt% add up to 100 wt%.

## Revendications

1. Procédé de fabrication de mousses dures de polyuréthane ou de mousses dures de polyisocyanurate, comprenant la mise en réaction de
A) au moins un polyisocyanate,
B) au moins un polyéther-polyol modifié par un acide gras,
C) au moins un polyéther-polyol fabriqué par mise en réaction d'au moins un polyol en tant que produit de départ avec de l'oxyde d'alkylène,
D) éventuellement un ou plusieurs polyols, qui sont différents des composants B) et C), le rapport entre la quantité en poids du composant D) et la somme des quantités en poids des composants B) et C) étant de 0 à 1,
E) éventuellement un ou plusieurs agents ignifuges,
F) un ou plusieurs agents gonflants,
G) un ou plusieurs catalyseurs et
H) éventuellement d'autres adjuvants et/ou additifs, dans lequel
ledit au moins un polyéther-polyol modifié par un acide gras B) présente une fonctionnalité de 2,5 à 8, et contient au moins un produit de réaction de
B1) 15 à 63 % en poids d'un ou de plusieurs polyols ou d'une ou de plusieurs polyamines ayant une fonctionnalité moyenne de 2,5 à 8,
B2) 2 à 30 % en poids d'un ou de plusieurs acides gras et/ou monoesters d'acides gras,
B3) 35 à 83 % en poids d'un ou de plusieurs oxydes d'alkylène contenant 2 à 4 atomes C,
à chaque fois par rapport à la quantité en poids des composants B1) à B3), qui est de 100 % en poids, et ledit au moins un polyol du composant C est choisi parmi les composés ayant une fonctionnalité OH de 2 ou 3, et la quantité en poids d'oxyde d'éthylène par rapport au poids total d'oxyde d'alkylène dans le composant C est d'au moins 90 % en poids.

2. Procédé selon la revendication 1, dans lequel aucune amine aromatique n'est utilisée en tant que produit de départ dans le composant C).

3. Procédé selon la revendication 1, dans lequel exclusivement de l'oxyde d'éthylène est utilisé en tant qu'oxyde d'alkylène dans le composant C).

4. Procédé selon la revendication 1, dans lequel ledit au moins un produit de départ du composant C) est choisi parmi l'éthylène glycol et la glycérine.

5. Procédé selon une ou plusieurs des revendications 1 à 4, dans lequel aucun composant D) n'est utilisé.

6. Procédé selon une ou plusieurs des revendications 1 à 5, dans lequel les polyols ou les polyamines du composant B1) sont choisis dans le groupe constitué par les sucres, la pentaérythrite, le sorbitol, le triméthylolpropane, la glycérine, la toluylène-diamine, l'éthylène diamine, l'éthylène glycol, le propylène glycol et l'eau.

7. Procédé selon une ou plusieurs des revendications 1 à 6, dans lequel le composant B1) contient un mélange de glycérine et de saccharose.

8. Procédé selon une ou plusieurs des revendications 1 à 7, dans lequel le composant B2) contient de l'acide oléique ou un dérivé d'acide oléique.

9. Procédé selon une ou plusieurs des revendications 1 à 8, dans lequel l'oxyde d'alkylène du composant B3) est l'oxyde de propylène.

10. Procédé selon une ou plusieurs des revendications 1 à 9, dans lequel le composant B) présente un indice OH de 200 à 700 mg KOH/g.

11. Procédé selon une ou plusieurs des revendications 1 à 10, dans lequel un catalyseur d'alcoxylation aminé est utilisé pour la fabrication du composant B).

12. Procédé selon une ou plusieurs des revendications 1 à 11, dans lequel le composant E) est le phosphate de tris(2-chloropropyle) (TCPP).

13. Procédé selon une ou plusieurs des revendications 1 à 12, dans lequel le composant G) est un mélange d'acétate de potassium et d'éther de bis(2-diméthylaminoéthyle).

14. Mélange de polyols contenant les composants B), C) et éventuellement D), E), F), G) et H), chacun tels que définis dans les revendications 1 à 13.

15. Mélange de polyols selon la revendication 14, contenant :
20 à 90 % en poids des polyéther-polyols modifiés par un acide gras B),
1 à 60 % en poids des polyéther-polyols C),
0 à 35 % en poids des polyols D), le rapport entre la quantité en poids du composant D) et la somme des quantités en poids des composants B) et C) étant de 0 à 1,
1 à 30 % en poids d'agents ignifuges E),
0,001 à 15 % en poids des catalyseurs G),
0,01 à 10 % en poids des adjuvants et/ou additifs H), éventuellement 1 à 35 % en poids des agents gonflants F), à chaque fois par rapport au poids total des composants B) à H), la somme des % en poids étant de 100 % en poids.
